# EUROPÄISCHE PATENTANMELDUNG

(11) **EP 1 052 491 A1**
(43) Veröffentlichungstag der Anmeldung: **15.11.2000**
(21) Anmeldenummer: 00109946.4
(22) Anmeldetag: 11.05.2000
(51) Int. Cl.: G01M 3/16

(54) **Verfahren zur Ortung von Undichtigkeitsstellen auf Flachdächern oder dgl.**

(30) Priorität: 11.05.1999 DE 19921556
(71) Anmelder: Dörle, Alfred, D-79112 Freiburg (DE)
(72) Erfinder: Dörle, Alfred, D-79112 Freiburg (DE)
(74) Vertreter: Goy, Wolfgang, Dipl.-Phys.

(57) **Zusammenfassung**

Ein Verfahren zur Ortung von Undichtigkeitsstellen 4 auf Flachdächern oder dgl. sieht vor, zwischen der Unterseite 6 und der Oberseite 13 des Flachdaches mittels einer Wechselspannungsquelle 9 eine Wechselspannung mit einer Frequenz von ungefähr 5 KHz anzulegen. Die der Oberseite 13 zugeordnete Kontaktstelle 14 der Wechselspannungsquelle 9 wird durch einen Abtastleiter 13 in Form eines Meßstabes gebildet, welcher die Oberseite 13 des Flachdaches punktweise abtastet. Je näher sich der Abtastleiter 12 von der aufzuspürenden Undichtigkeitsstelle 4 befindet, desto größer wird die Amplitude. Das Meßsignal wird dabei einem Kopfhörer 15 aufgegeben. Der lauteste Ton entsteht dann, wenn sich der Abtastleiter 12 punktgenau an der Undichtigkeitsstelle 4 befindet.

## Beschreibung

Die Erfindung betrifft ein Verfahren zur Ortung von Undichtigkeitsstellen auf Flachdächern oder dgl. nach dem Oberbegriff des Anspruchs 1.

In den Fällen, in denen ein Flachdach undicht geworden ist, stellt sich zunächst immer die Frage, wo sich die Undichtigkeiten befinden. Das Auffinden von derartigen Leckstellen in Flachdächern bereitet einen erheblichen Zeitaufwand. Oft werden dabei mutmaßliche Leckstellen aufgespürt und ausgebessert, die in Wirklichkeit gar keine Leckstellen sind.

Ein bekanntes Verfahren zur Ortung von Undichtigkeitsstellen auf Flachdächern sieht einen speziellen Impulsgenerator vor, welcher permanent Impulsströme mit einer Spannung von 40 V abgibt. Dabei wird an der Unterseite der Dachabdichtung über die durchfeuchtete Isolierung der eine Pol des Impulsgenerators mit 40 V Gleichspannung angelegt. Dies geschieht entweder über das Erdungskabel oder über eine spezielle Drahtverbindung. Auf der Oberseite der Dachabdichtung wird am Rand der Verwahrung ringförmig um das gesamte Dach herum ein Ringleiter verlegt, welcher an den anderen Pol des Impulsgenerators angeschlossen wird. Somit liegt der eine Pol des Impulsgenerators an der Decke und der andere Pol an der Ringleitung an. Da jede Dachhaut mehr oder weniger nichtleitend ist, sucht sich der Stromimpuls den Weg über die Feuchtigkeit zur Leckstelle und fließt dann über die feuchte Dachhaut nach allen Seiten zur Ringleitung. Um die Undichtigkeitsstelle zu lokalisieren, wird daher die Richtung des elektrischen Stromes auf der durchfeuchteten Oberseite des Flachdaches gemessen. Dies erfolgt mittels zweier Meßstäbe, welche mit der Oberseite des Flachdaches elektrisch kontaktiert werden. Befinden sich die beiden Meßstäbe hintereinander in Fließrichtung des elektrischen Stromes, wird ein höherer Strom gemessen als wenn die beiden Meßstäbe in Fließrichtung versetzt zueinander oder gar senkrecht zueinander ausgerichtet sind. Am Ort der Undichtigkeitsstelle fließt gar kein Strom zwischen den beiden Meßstäben.

Der Nachteil bei diesem bekannten Ortungsverfahren besteht insbesondere in der Störanfälligkeit des Meßergebnisses. Insbesondere durch leistungsstarke elektrische Geräte in der Nähe des Flachdaches werden Felder erzeugt, welche die Richtung des mittels der Meßstäbe zu ermittelnden elektrischen Stromes verfälschen mit dem Ergebnis, daß der genaue Ort der Undichtigkeitsstelle nicht exakt ermittelt werden kann.

Davon ausgehend liegt der Erfindung die **Aufgabe** zugrunde, ein präziseres Verfahren zur Ortung von Undichtigkeitsstellen auf Flachdächern oder dgl. zu schaffen.

Die technische **Lösung** ist gekennzeichnet durch die Merkmale im Kennzeichen des Anspruchs 1.

Die Grundidee des erfindungsgemäßen Ortungsverfahrens besteht darin, einen geschlossenen Stromkreis zu schaffen, welcher durch die zu ortende Undichtigkeitsstelle hindurchgeht, um in diesem Stromkreis eine elektrische Meßgröße auszuwerten. Diese Meßgröße des gesamten geschlossenen Stromkreises bzw. des Meßkreises ist veränderlich, und zwar in Abhängigkeit des Abstandes des Abtastleiters von der zu messenden Undichtigkeitsstelle, da der Stromkreis bzw. Meßkreis geschwächt wird, je weiter weg die Abtastleitung von der Undichtigkeitsstelle ist. In der Regel wird sich somit der Wert der Meßgröße verringern, je weiter weg der Abtastleiter von der Undichtigkeitsstelle ist. Durch Verändern der Positionen des Abtastleisters kann man sich somit sukzessive dem genauen Ort der Undichtigkeitsstelle annähern. - Das erfindungsgemäße Verfahren dient zur zentimetergenauen Ortung von undichten Stellen auf Flachdächern mit elektrisch nicht leitenden Dachabdichtungen (Bitumen, Sarafinfolie). Das Verfahren kann sowohl an Warm- als auch an Kaltdächern eingesetzt werden. Voraussetzung für eine Leckageortung ist eine Durchfeuchtung der unter der Abdichtbahn liegenden Isolierstoffe. In der Regel können auf dem Flachdach befindliche Auflastungen wie Kiesschüttungen, Begrünungen etc. auf der Abdichtbahn belassen werden. Schließlich können mittels des erfindungsgemäßen Verfahrens auch Folienteiche und Schwimmbecken mit Folienabdichtungen auf Leckstellen überprüft werden. Der besondere Vorteil des erfindungsgemäßen Ortungsverfahrens besteht darin, daß es von Störfeldern unabhängig ist und somit immer eine zentimetergenaue Ortung der Undichtigkeitsstelle möglich ist.

Mit der Wechselspannungsquelle gemäß der Weiterbildung des Anspruchs 2 können insbesondere Sinus-, Dreieck-, Rechteck- oder Rampensignale erzeugt werden.

Die Frequenz der Wechselspannungsquelle kann gemäß Anspruch 3 zwischen 2 Hz und 13 MHz, insbesondere bei ungefähr 5 KHz liegen. Insbesondere die Frequenz bei ungefähr 5 KHz liegt im hörbaren Bereich, so daß durch die Umwandlung des elektrischen Signals in ein akkustisches Signal dies als Maß für die Stärke des Meßkreises verwendet werden kann.

Die konkrete technische Realisierung hiervon schlägt die Weiterbildung gemäß Anspruch 4 vor, wonach im Meßkreis als Meßgröße die Amplitude gemessen wird. Die Amplitude des Stromes im Meßkreis ist ein Maß dafür, wie weit die Abtaststelle von der Undichtigkeitsstelle liegt. Je weiter weg die Abtaststelle von der Undichtigkeitsstelle ist, desto geringer ist die Amplitude des Meßsignals. Befindet sich die Abtaststelle direkt an der Undichtigkeitsstelle, ist dort der elektrische Widerstand am geringsten und damit die Amplitude am größten.

Die bevorzugte technische Realisierung der Amplitudenmessung schlägt die Weiterbildung gemäß Anspruch 5 vor. Dabei wird man über die Lautstärke des Tones zur undichten Stelle im Flachdach geführt. Mittels des Empfängers im Meßkreis kann festgestellt werden, wo der Ton lauter bzw. leiser wird. Befindet sich die Abtaststelle mit dem Meßstab im Bereich der undichten Stelle, ist dort der elektrische Widerstand zwischen dieser Stelle und der Gegenkontaktstelle an der Unterseite des Flachdaches am geringsten. Demgemäß ist der Ton an dieser Undichtigkeitsstelle am lautesten.

Um die Mobilität der die Ortung durchführenden Person optimal zu gewährleisten, schlägt die Weiterbildung gemäß Anspruch 6 die drahtlose Übertragung der Meßsignale zum Kopfhörer vor. Dies kann vorzugsweise mittels eines Infrarotsenders durchgeführt werden.

Der Vorteil der Weiterbildung gemäß Anspruch 7 schließlich besteht darin, daß schon bei einem relativ großen Abstand von der Undichtigkeitsstelle ermittelt werden kann, in welcher Richtung diese Undichtigkeitsstelle liegt. Es kann dabei die gesamte Oberseite des Flachdaches durchfeuchtet werden. Es ist aber auch denkbar, nur - großflächige - Teilbereiche zu durchfeuchten, von denen man annimmt, daß sie für die Messung relevant sind.

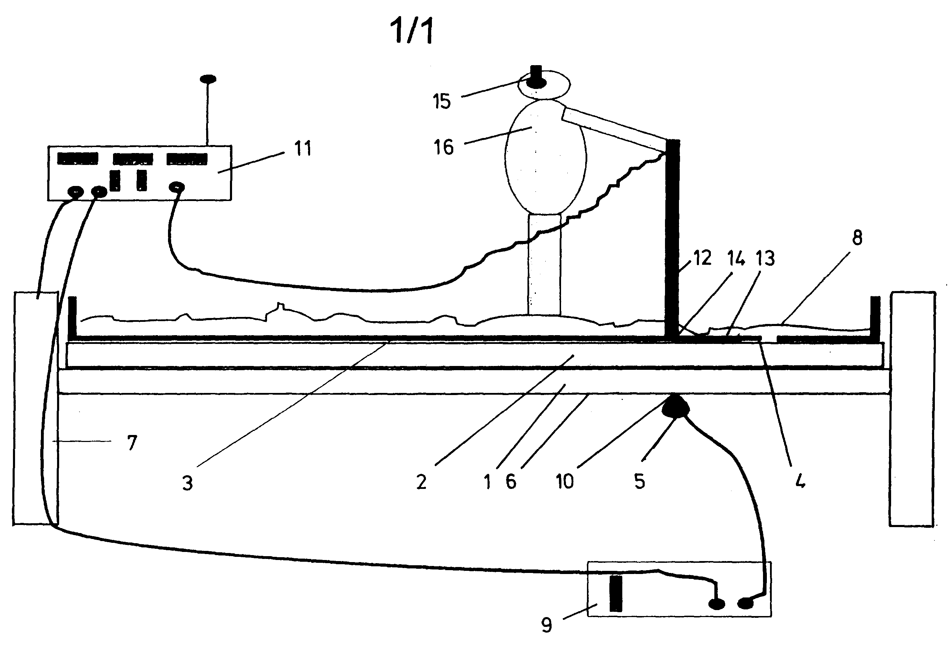

Ein Ausführungsbeispiel des erfindungsgemäßen Ortungsverfahrens von Undichtigkeitsstellen auf Flachdächern oder dgl. wird nachfolgend anhand der Zeichnung beschrieben, wobei die Zeichnung in einer schematischen Schnittdarstellung durch ein Flachdach den Aufbau des Ortungsgerätes zeigt.

Das in der Zeichnung angedeutete Flachdach weist eine Betondecke 1 auf. Auf ihr befindet sich eine Wärmedämmung 2 sowie eine Dichtbahn 3, welche seitlich hochgezogen ist. Diese Dichtbahn 3 möge eine Undichtigkeitsstelle 4 besitzen, welche in einer Tropfstelle 5 an der Unterseite 6 der Betondecke 1 mündet. Seitlich sind die Wände 7 des Gebäudes angedeutet. Auf der oberen Dichtbahn 3 befindet sich noch eine schematisch angedeutete Auflast 8, beispielsweise eine Kiesschüttung oder eine Begrünung.

Das Gerät zur Ortung der Undichtigkeitsstelle 4 in der Dichtbahn 3 weist zunächst eine elektrische Wechselspannungsquelle 9 auf. Der eine Pol dieser Wechselspannungsquelle 9 ist über einen Leiter mit der Unterseite 6 der Betondecke 1 im Bereich der Tropfstelle 5 über eine Kontaktstelle 10 elektrisch kontaktiert. Der andere Pol der Wechselspannungsquelle 9 ist ebenfalls über einen Leiter an ein Meßinstrument 11 in Form eines Audio-Verstärkers angeschlossen. Der Ausgang dieses Meßinstruments 11 ist mit einem Abtastleiter 12 in Form eines Meßstabes verbunden. Außerdem ist das Meßinstrument 11 über die Wand 7 des Gebäudes geerdet. Der Abtastleister 12 kann mit der Oberseite 13 des Flachdaches an einer Kontaktstelle 14 in elektrischen Kontakt gebracht werden:

Der Ortungsverfahren funktioniert wie folgt:

Wie zuvor erwähnt, wird an die Unterseite der Betondecke 1 über die durchfeuchtete Wärmedämmung 2 der eine Pol der Wechselspannungsquelle 9 angelegt. Dies kann über das Erdungskabel oder - wie im dargestellten Ausführungsbeispiel - über eine Drahtverbindung erreicht werden. Die Oberfläche der Dachabdichtung wird durch eine Bewässerung leitfähig.

Die Wechselspannungsquelle 9 gibt eine Wechselspannung in Form einer sinusförmigen Tonfrequenz mit 5 KHz ab. Das elektrische Spannungspotential liegt dabei sowohl an der Kontaktstelle 10 an der Unterseite 6 der Betondecke 1 als auch am unteren Ende des Abtastleiters 12 an. Sobald der Abtastleiter 12 mit der Oberseite 13 des Flachdaches an der Kontaktstelle 14 in elektrischen Kontakt gebracht wird, schließt sich der elektrische Stromkreis zwischen dieser Kontaktstelle 14, dem Leiter zwischen dem Abtastleiter 12 und dem Meßinstrument 11, dem Meßinstrument 11 und der Wechselspannungsquelle 9, der Wechselspannungsquelle 9 und der Kontaktstelle 10 an der Unterseite 6 der Betondecke 1 und schließlich zwischen den beiden Kontaktstellen 10, 14. Da aufgrund der in der Durchfeuchtung enthaltenen Ionen ein Strom fließt, ist der Stromkreis geschlossen und insgesamt ein Meßkreis geschaffen. Der elektrische Widerstand im Meßkreis wird maßgeblich durch den elektrischen Widerstand zwischen den beiden Kontaktstellen 10, 14 durch die Undichtigkeitsstelle 4 hindurch bestimmt. Je weiter weg die Kontaktstelle 14 des Abtastleiters 12 von der Undichtigkeitsstelle 4 ist, desto größer ist der elektrische Widerstand und damit um so geringer der elektrische Stromfluß. Der geringe Stromfluß resultiert in einer geringen Amplitude im Meßkreis. Das Amplitudensignal wird im Meßinstrument 11 verstärkt und einem Kopfhörer 15 über einen Infrarotsender aufgegeben.

Die Bedienungsperson 16 verändert laufend die Position des Abtastleiters 12. Durch die Amplitudenveränderungen wird der Ton in seinem Kopfhörer 15 lauter oder leiser. Je lauter der Ton im Kopfhörer 15 ist, desto näher befindet er sich an der Undichtigkeitsstelle 5. Die maximale Lautstärke erhält er dann, wenn die Kontaktstelle 14 des Abtastleiters 12 mit der Undichtigkeitsstelle 4 übereinstimmt. In diesem Fall hat die Bedienungsperson 16 die Undichtigkeitsstelle 4 gefunden.

### Bezugszeichenliste

- 1: Betondecke
- 2: Wärmedämmung
- 3: Dichtbahn
- 4: Undichtigkeitsstelle
- 5: Tropfstelle
- 6: Unterseite
- 7: Wand
- 8: Auflast
- 9: Wechselspannungsstelle
- 10: Kontaktstelle
- 11: Meßinstrument
- 12: Abtastleiter
- 13: Oberseite
- 14: Kontaktstelle
- 15: Kopfhörer
- 16: Bedienungsperson

## Patentansprüche

1. Verfahren zur Ortung von Undichtigkeitsstellen (4) auf Flachdächern oder dgl.,
bei dem zwischen der durchfeuchteten Oberseite (13) und der durchfeuchteten Unterseite (6) des Flachdaches eine elektrische Spannung angelegt wird und
bei dem eine elektrische Meßgröße in dem durch die angelegte elektrische Spannung gebildeten Stromkreis in einem Meßkreis gemessen wird,
wobei die Oberseite (13) des Flachdaches Stelle für Stelle mit einem Abtastleiter (12) abgetastet wird, dem ein Meßinstrument (11) zugeordnet ist,
**dadurch gekennzeichnet,**
daß der in sich geschlossene Stromkreis zugleich auch als Meßkreis verwendet wird,
daß ein einziger Abtastleister (12) für den Meßkreis verwendet wird und
daß der Meßkreis durch die Kontaktstelle (14) des Abtastleiters (12) auf der Oberseite (13) des Flachdaches, durch die mit dem Abtastleister (12) elektrisch verbundene, der Unterseite (6) des Flachdaches zugeordnete elektrische Kontaktstelle (10) sowie durch den durchfeuchteten sowie durch die Undichtigkeitsstelle (4) hindurchgehenden Bereich zwischen den beiden Kontaktstellen (10, 14) gebildet wird.

2. Verfahren nach dem vorhergehenden Anspruch,
dadurch gekennzeichnet,
daß der Meßkreis durch eine elektrische Wechselspannungsquelle (9) erzeugt wird.

3. Verfahren nach Anspruch 2,
dadurch gekennzeichnet,
daß die Frequenz der Wechselspannungsquelle (9) zwischen 2 Hz und 13 MHz, insbesondere ungefähr 5 KHz beträgt.

4. Verfahren nach Anspruch 2 oder 3,
dadurch gekennzeichnet,
daß im Meßkreis als Meßgröße die Amplitude gemessen wird.

5. Verfahren nach Anspruch 4,
dadurch gekennzeichnet,
daß als Meßinstrument (11) für die Amplitude ein Lautsprecher oder ein Kopfhörer (15) verwendet wird, welches das elektrische Meßsignal in ein akkustisches Signal umwandelt.

6. Verfahren nach Anspruch 5,
dadurch gekennzeichnet,
daß die Signalübertragung zwischen der Einrichtung zum Messen der Amplitude im Meßinstrument (11) und dem Kopfhörer (15) drahtlos, insbesondere mittels eines Infrarotsenders durchgeführt wird.

7. Verfahren nach einem der vorhergehenden Ansprüche,
dadurch gekennzeichnet,
daß die Oberseite (13) des Flachdaches vor Durchführung der Messung durchfeuchtet wird.
